(19) Europäisches Patentamt
European Patent Office
Office européen des brevets

(11) EP 0 969 994 B1

(12) **EUROPÄISCHE PATENTSCHRIFT**

(45) Veröffentlichungstag und Bekanntmachung des Hinweises auf die Patenterteilung:
**05.09.2001   Patentblatt 2001/36**

(51) Int Cl.7: **B60T 8/00**

(86) Internationale Anmeldenummer:
**PCT/DE98/00749**

(21) Anmeldenummer: **98924004.9**

(22) Anmeldetag: **13.03.1998**

(87) Internationale Veröffentlichungsnummer:
**WO 98/44353 (08.10.1998 Gazette 1998/40)**

(54) **VERFAHREN UND VORRICHTUNG ZUR ERMITTLUNG EINER DIE FAHRZEUGGESCHWINDIGKEIT BESCHREIBENDEN GRÖSSE**

METHOD AND DEVICE FOR DETERMINING A VALUE REPRESENTING THE SPEED OF A VEHICLE

PROCEDE ET DISPOSITIF POUR DETERMINER UNE GRANDEUR REPRESENTANT LA VITESSE D'UN VEHICULE

(84) Benannte Vertragsstaaten:
**DE FR GB IT**

(30) Priorität: **29.03.1997  DE 19713251**

(43) Veröffentlichungstag der Anmeldung:
**12.01.2000   Patentblatt 2000/02**

(73) Patentinhaber: **ROBERT BOSCH GMBH**
**70442 Stuttgart (DE)**

(72) Erfinder:
• **MUELLER, Elmar**
  **D-71706 Markgröningen (DE)**
• **KOST, Friedrich**
  **D-70806 Kornwestheim (DE)**
• **WUERTH, Gebhard**
  **D-74429 Sulzbach-Laufen (DE)**

(56) Entgegenhaltungen:
**DE-A- 3 833 212      DE-A- 3 917 976**
**DE-A- 4 314 830      US-A- 4 675 819**
**US-A- 4 818 037**

## Beschreibung

Stand der Technik

Die Erfindung betrifft ein Verfahren bzw. eine Vorrichtung zur Ermittlung einer die Fahrzeuggeschwindigkeit beschreibenden Größe.

Verfahren und Vorrichtungen zur Ermittlung einer die Fahrzeuggeschwindigkeit beschreibenden Größe sind aus dem Stand der Technik in vielerlei Modifikationen bekannt.

In der DE-OS 38 33 212 (US 5,272,634) ist für ein mit einem Antiblockierregelsystem ausgestattetes, einachsig angetriebenes Fahrzeug, die Bildung einer Referenzgröße für die Fahrzeuggeschwindigkeit außerhalb der Bremsdruckregelung beschrieben. Im wesentlichen wird hierzu ausgehend von den Geschwindigkeiten der beiden angetriebenen Räder eine gemittelte Radgeschwindigkeit ermittelt. Ist die zeitliche Ableitung dieser gemittelten Radgeschwindigkeit größer Null, so wird die Referenzgröße durch die Geschwindigkeit des langsameren der beiden angetriebenen Räder bestimmt. Ist die zeitliche Ableitung dieser gemittelten Radgeschwindigkeit kleiner Null, so wird die Referenzgröße durch die Geschwindigkeit des schnelleren der beiden angetriebenen Räder bestimmt. Dabei ist die Steigung der Referenzgröße für die Fahrzeuggeschwindigkeit auf einen maximalen Wert beschränkt.

Die DE-OS 40 09 195 (US 5,364,174) beschreibt für ein in einem allradgetriebenen Fahrzeug eingesetztes Antiblockierregelsystem die Bildung einer für die Schlupfregelung benötigten Referenzgeschwindigkeit. Im wesentlichen wird hierbei die Referenzgeschwindigkeit bei Geschwindigkeitszunahme durch die Geschwindigkeit des langsamsten und bei Geschwindigkeitsabnahme durch die Geschwindigkeit des drittschnellsten Rades bestimmt. Im Übergangsbereich zwischen Zunahme und Abnahme, wird der erreichte Wert der langsamsten Radgeschwindigkeit konstant gehalten. Für den Fall, daß die Geschwindigkeit des drittschnellsten Rades zu stark von einer Hilfsreferenzgeschwindigkeit abweicht, wird die Referenzgeschwindigkeit parallel zu dieser Hilfsreferenzgeschwindigkeit geführt. Gebildet wird die Hilfsreferenzgeschwindigkeit dadurch, daß sie durch die Geschwindigkeit des drittschnellsten Rades angehoben und durch die Geschwindigkeit des schnellsten Rades verringert wird. Auch sie wird in einem Übergangsbereich konstant gehalten. Liegt ein Instabilitätsfall aufgrund einer Blockierneigung vor, so wird die Steigung der Referenzgeschwindigkeit durch die Steigung der Hilfsreferenzgeschwindigkeit bestimmt. Drehen die Räder durch, so wird die Referenzgeschwindigkeit konstant gehalten und der Anstieg der Hilfsreferenzgeschwindigkeit auf eine physikalisch mögliche Fahrzeugbeschleunigung begrenzt. Werden die Hinterräder des allradgetriebenen Fahrzeuges beim Bremsen vom Antrieb entkoppelt, so wird eine leicht modifizierte Bildung der Referenzgeschwindigkeit verwendet. Außerhalb der Regelung wird die Referenzgeschwindigkeit angehoben, wenn die Geschwindigkeiten aller Räder über ihr liegen. Sind zwei oder drei Räder schneller als die Referenzgeschwindigkeit, so wird sie konstant gehalten. Ist keines oder nur eines der Räder schneller als die Referenzgeschwindigkeit, so wird die Referenzgeschwindigkeit nach unten angeglichen.

In der DE 43 14 830 A1 ist ein Verfahren zur Bestimmung der Referenzgeschwindigkeit eines Fahrzeuges beschrieben. Hierzu werden die Radumfangsgeschwindigkeiten, die Fahrzeuglängsbeschleunigung und die Fahrzeugquerbeschleunigung ermittelt. In Abhängigkeit der Fahrzeuglängsbeschleunigung und der Fahrzeugquerbeschleunigung werden verschiedene Fahrsituationen für das Fahrzeug unterschieden. In Abhängigkeit der jeweiligen Fahrsituation wird eine Gruppe von Raddrehzahlen ausgewählt, wobei die Referenzgeschwindigkeit aus den ausgewählten Raddrehzahlen gebildet wird. In der Fahrsituation "Bremsungen allgemein" berechnet sich die Referenzgeschwindigkeit als die betragsmäßig größte Radumfangsgeschwindigkeit aller vier Räder. In der Fahrsituation "Beschleunigen, Konstantfahrt, Motorschubbetrieb" ergibt sich die Referenzgeschwindigkeit als arithmetisches Mittel der Radumfangsgeschwindigkeiten der nicht angetriebenen Räder. Bei den Fahrsituationen "Bremsung in einer Linkskurve" bzw. "Bremsung in einer Rechtskurve" sind diejenigen Räder mit der größten Radlast für die Referenzgeschwindigkeit ausschlaggebend.

Die DE 39 17 976 A1 beschreibt ein Verfahren zur Bestimmung der Fahrzeuggeschwindigkeit bei einem Kraftfahrzeug mit Heckantrieb. Hierzu werden die Winkelgeschwindigkeiten der Vorderräder und zumindest die mittlere Winkelgeschwindigkeit der beiden Hinterräder des Fahrzeuges erfaßt. Ferner wird die Beschleunigung des Fahrzeuges zumindest annähernd in Fahrzeuglängsrichtung bestimmt. Bei positiver Beschleunigung des Fahrzeuges wird die Fahrzeuggeschwindigkeit mittels der Winkelgeschwindigkeit mindestens eines der Vorderräder berechnet. Bei starker Verzögerung de Fahrzeuges wird die Fahrzeuggeschwindigkeit mittels der größten Winkelgeschwindigkeit der einzelnen Räder des Fahrzeuges berechnet.

Die DE 38 33 212 A1 betrifft ein Antiblockiersystem, das eine Schlupfregelung enthält. Im Rahmen dieser Schlupfregelung muß eine Referenzgröße gebildet werden. Die Größe der Referenzgröße wird jeweils nur durch eine der Radgeschwindigkeiten der angetriebenen Räder bestimmt. Zu diesem Zweck wird der Mittelwert der beiden Radgeschwindigkeitssignele der angetriebenen Räder ermittelt. Ist die Steigung dieses Mittelwertes größer als 0, so wird die Größe der Referenzgröße durch das Radgeschwindigkeitssignal des langsameren Rades bestimmt. Ist die Steigung dieses Mittelwertes kleiner als 0, so wird die Größe der Referenzgröße durch das Radgeschwindigkeitssignal des schnelleren Rades bestimmt.

Systeme zur Regelung des Bremsschlupfes bzw. des Antriebsschlupfes sind in allgemeiner Form beispielsweise aus dem von der Robert Bosch GmbH Stuttgart herausgegebenen Buch "Bremsanlagen für Kraftfahrzeuge", VDI-Verlag, Düsseldorf, 1. Auflage, 1994, bekannt.

Systeme zur Regelung einer die Fahrdynamik eines Fahrzeuges beschreibenden Größe sind beispielsweise aus der in der Automobiltechnischen Zeitschrift (ATZ) 96, 1994, Heft 11, auf den Seiten 674 bis 689 erschienenen Veröffentlichung "FDR - die Fahrdynamikregelung von Bosch", bekannt.

Ausgehend von der DE 43 14 830 A1 ergibt sich für die vorliegende Erfindung folgende Aufgabe: Die Aufgabe besteht darin, ein Verfahren zur Ermittlung einer die Geschwindigkeit eines Fahrzeuges beschreibenden Größe zu schaffen, mit dem ausgehend von dem Bewegungsverhalten des Fahrzeuges und unter Berücksichtigung des Radverhaltens eine genauere Ermittlung der die Geschwindigkeit des Fahrzeuges beschreibenden Größe möglich ist.

Diese Aufgabe wird durch die Merkmale des Anspruchs 1 bzw. durch die des Anspruchs 13 gelöst.

Vorteile der Erfindung

Der Vorteil des erfindungsgemäßen Verfahrens bzw. der erfindungsgemäßen Vorrichtung gegenüber dem eingangs genannten Stand der Technik ist der, daß mit ihm bzw. mit ihr die die Geschwindigkeit des Fahrzeuges beschreibende Größe für ein beliebig angetriebenes Fahrzeug, d.h. für ein front-, bzw. heck- bzw. allradgetriebenes Fahrzeug für einen beliebigen Betriebszustand des Fahrzeuges ermittelt werden kann. Dabei ist die Ermittlung der die Fahrzeuggeschwindigkeit beschreibenden Größe unabhängig davon, ob während ihrer Ermittlung ein im Fahrzeug implementiertes Regelungssystem im Sinne einer Bremsschlupfregelung bzw. einer Antriebsschlupfregelung bzw. im Sinne einer beispielsweise der Brems- bzw. Antriebsschlupfregelung übergeordneten Regelung zur Regelung einer die Fahrdynamik des Fahrzeuges beschreibenden Größe aktiv ist.

Bisher war für die unterschiedlichen Fahrzeugantriebskonzepte bzw. für jede Art von Schlupfregelsystem, welches in einem Fahrzeug zum Einsatz kam, ein eigenes Verfahren bzw. eine eigene Vorrichtung zur Ermittlung der die Geschwindigkeit des Fahrzeuges beschreibenden Größe erforderlich. Mit dem erfindungsgemäßen Verfahren bzw. mit der erfindungsgemäßen Vorrichtung liegt nun ein Verfahren bzw. eine Vorrichtung vor, welches bzw. welche für jedes beliebige Schlupfregelsystem eingesetzt werden kann.

Die universelle Einsetzbarkeit des erfindungsgemäßen Verfahrens und somit auch der erfindungsgemäßen Vorrichtung beruht zum einen darauf, daß die die Geschwindigkeit des Fahrzeuges beschreibende Größe ausgehend von einem vorteilhaft gewählten Ansatz gebildet wird, der einen die Geschwindigkeit des Fahrzeuges beschreibenden Anteil bzw. einen die Beschleunigung des Fahrzeuges beschreibenden Anteil berücksichtigt. Zum anderen beruht sie darauf, daß der zum Zeitpunkt der Bildung der die Geschwindigkeit des Fahrzeuges beschreibenden Größe vorliegende Betriebszustand des Fahrzeuges ermittelt wird, und daß in Abhängigkeit dieses Betriebszustandes dasjenige Rad des Fahrzeuges ausgewählt wird, welches für die Ermittlung der die Geschwindigkeit des Fahrzeuges beschreibenden Größe zu diesem Zeitpunkt und in diesem Betriebszustand des Fahrzeuges am besten geeignet ist.

Die Ermittlung des Betriebszustandes des Fahrzeuges erfolgt vorteilhafterweise wenigstens in Abhängigkeit von den wenigstens für zwei Räder des Fahrzeuges ermittelten Geschwindigkeiten bzw. wenigstens in Abhängigkeit einer wenigstens in Abhängigkeit dieser Geschwindigkeiten ermittelten Größe.

Im Fall der oben genannten, in die Ermittlung des Betriebszustandes des Fahrzeuges eingehenden ersten Abhängigkeit ist es besonders vorteilhaft, wenn zur Ermittlung des Betriebszustandes die Geschwindigkeiten der wenigstens zwei Räder ihrer Größe nach sortiert werden und die die Geschwindigkeit des Fahrzeuges beschreibende Größe mit den sortierten Geschwindigkeiten verglichen wird. Im Fall der oben genannten zweiten Abhängigkeit bietet es sich an, eine die Beschleunigung des Fahrzeuges beschreibende Größe zu verwenden, in die neben den Geschwindigkeiten der wenigstens zwei Räder ferner wenigstens den Zustand des Motors kennzeichnende Größen eingehen. Im Fall der zweiten Abhängigkeit kann durch Verwendung einer zweiten, wenigstens in Abhängigkeit von den Zustand des Motors kennzeichnenden Größen ermittelten Größe, eine Verfeinerung bzgl. der Einteilung der Betriebszustände erreicht werden. Ausgehend von den so ermittelten Betriebszuständen des Fahrzeuges ist eine Entscheidung bzgl. des auszuwählenden Rades möglich.

Die Geschwindigkeit des für den jeweiligen Betriebszustand des Fahrzeuges ermittelten Rades wird bei der Bildung des die Geschwindigkeit des Fahrzeuges beschreibenden Anteils bzw. bei der Bildung des die Beschleunigung des Fahrzeuges beschreibenden Anteils berücksichtigt. Als vorteilhaft hat es sich hierbei erwiesen, die Geschwindigkeit des ausgewählten Rades jeweils mit einem, ebenfalls wenigstens in Abhängigkeit des Betriebszustandes des Fahrzeuges ermittelten Faktor, zu bewerten. Durch die Faktoren wird festgelegt, wie stark das für den jeweiligen Betriebszustand ausgewählte Rad in die Bildung der die Geschwindigkeit des Fahrzeuges beschreibenden Größe eingeht.

Vorteilhafterweise wird bei der Ermittlung des die Beschleunigung des Fahrzeuges beschreibenden Anteils zusätzlich wenigstens eine wenigstens in Abhängigkeit von den Zustand des Motors kennzeichnenden Größen bzw.

von den an den einzelnen Rädern wirkenden Bremsdrücke ermittelte Größe berücksichtigt.

Zumindest für einen Teil der Betriebszustände des Fahrzeuges ist es von Vorteil, die Ermittlung des ausgewählten Rades bzw. die Ermittlung der für die Bewertung der Geschwindigkeit des ausgewählten Rades erforderlichen Faktoren unter Verwendung von Plausibilitätsabfragen innerhalb des zugehörigen Betriebszustandes zu verfeinern.

Die Plausibilitätsabfragen können beispielsweise in Abhängigkeit der Geschwindigkeiten der Räder bzw. in Abhängigkeit von die Schlupfwerte der einzelnen Räder beschreibenden Größen durchgeführt werden.

Ein weiterer Vorteil des erfindungsgemäßen Verfahrens bzw. der erfindungsgemäßen Vorrichtung besteht darin, daß ausgehend von bekannten Schlupfregelsystemen im wesentlichen keine zusätzliche Sensorik erforderlich ist. So kann das erfindungsgemäße Verfahren bzw. die erfindungsgemäße Vorrichtung beispielsweise auf die ohnehin in Schlupfregelsystemen vorhandenen Sensoren zur Erfassung der Raddrehzahlen der einzelnen Räder zurückgreifen.

Weitere Vorteile sowie vorteilhafte Ausgestaltungen können den Unteransprüchen, der Zeichnung sowie der Beschreibung des Ausführungsbeispiels entnommen werden.

Zeichnung

Die Zeichnung besteht aus den Figuren 1 bis 4. Figur 1 zeigt beispielhaft ein mit einem Schlupfregelsystem ausgestattetes Fahrzeug, bei dem das erfindungsgemäße Verfahren bzw. die erfindungsgemäße Vorrichtung implementiert ist. In Figur 2 ist ausgehend von einem Schlupfregelsystem zum einen die für die Durchführung des erfindungsgemäßen Verfahrens bzw. die für die erfindungsgemäße Vorrichtung im wesentlichen benötigte Sensorik und zum anderen die Strukturierung des hierfür verwendeten Steuergerätes dargestellt. Figur 3 zeigt für das erfindungsgemäße Verfahren bzw. für die erfindungsgemäße Vorrichtung, ausgehend von welchen Größen die die Geschwindigkeit des Fahrzeuges beschreibende Größe ermittelt wird. In Figur 4 sind mit Hilfe einer Matrix die verschiedenen Betriebszustände des Fahrzeuges aufzeigt, anhand derer das für die Ermittlung der die Geschwindigkeit des Fahrzeuges beschreibenden Größe benötigte Rad des Fahrzeuges bzw. die zur Bewertung der Geschwindigkeit des ausgewählten Rades benötigten Faktoren ausgewählt werden.

Es sei darauf hingewiesen, daß Blöcke mit derselben Bezeichnung in unterschiedlichen Figuren dieselbe Funktion haben.

Ausführungsbeispiel

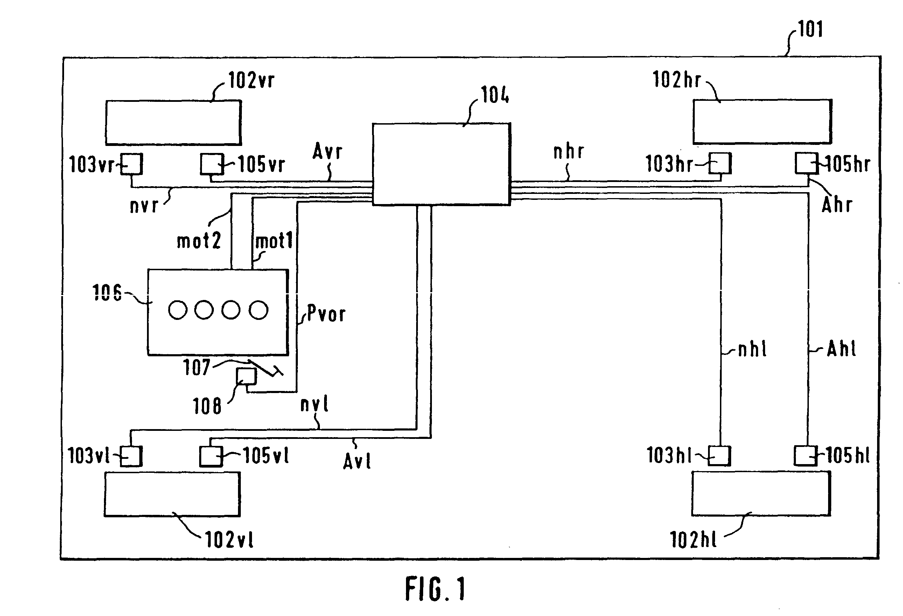

Die Erfindung geht von aus dem Stand der Technik bekannten Regelungssystemen aus, mit denen beispielsweise der Bremsschlupf bzw. der Antriebsschlupf der Räder eines Fahrzeuges beeinflußbar ist. Dies soll allerdings keine Einschränkung der erfindungsgemäßen Idee darstellen. Das erfindungsgemäße Verfahren bzw. die erfindungsgemäße Vorrichtung kann beispielsweise auch in einem System zur Regelung einer die Fahrdynamik des Fahrzeuges beschreibenden Größe, insbesondere der Gierwinkelgeschwindigkeit des Fahrzeuges, eingesetzt werden. Hierzu muß jedoch, ausgehend von Figur 1, das Fahrzeug mit zusätzlicher Sensorik ausgestattet sein.

Bei Systemen zur Regelung des Bremsschlupfes werden für üblich in bekannter Weise zur Regelung des Bremsschlupfes die auf die einzelnen Räder wirkenden Bremsmomente durch Betätigung der Bremsen variiert. Bei Systemen zur Regelung des Antriebsschlupfes wird in bekannter Weise der Antriebsschlupf der Räder für üblich durch Erzeugung eines Bremsmomentes einzelner Räder bzw. durch Beeinflussung des vom Motor abgegebenen Antriebsmomentes eingestellt. Für Systeme zur Regelung des Brems- und/oder Antriebsschlupfes gilt für die Einstellung der entsprechenden Schlüpfe entsprechendes. Bei Systemen zur Regelung einer die Fahrdynamik des Fahrzeuges beschreibenden Größe können üblicherweise die zur Regelung des entsprechenden Schlupfes erforderlichen Bremsmomente für die entsprechenden Räder unabhängig vom Fahrer individuell eingestellt werden. Ergänzend wird das vom Motor abgegebene Antriebsmoment beispielsweise im Sinne einer Antriebsmomentenregelung beeinflußt.

Einleitend soll zunächst auf die Problematik bei der Ermittlung einer die Geschwindigkeit eines Fahrzeuges beschreibenden Größe, welche im weiteren Verlauf als Referenzgeschwindigkeit des Fahrzeuges bezeichnet wird, eingegangen werden.

Bisher war zum einen für jede Art von Schlupfregelsystem, welches in einem Fahrzeug zum Einsatz kam, ein eigenes Konzept, d.h. ein eigenes Verfahren bzw. eine eigene Vorrichtung zur Ermittlung der Referenzgeschwindigkeit des Fahrzeuges erforderlich. So wurde beispielsweise in einem Bremsschlupfregler ein anderes Konzept eingesetzt, als in einem Antriebsschlupfregler.

Ebenso war für die unterschiedlichen Fahrzeugantriebskonzepte jeweils ein unterschiedliches Konzept für die Ermittlung der Referenzgeschwindigkeit des Fahrzeuges erforderlich. So unterscheidet sich beispielsweise das Konzept für ein einachsig angetriebenes Fahrzeug von dem für ein allradgetriebenes Fahrzeug. Bei einem einachsig angetriebenen Fahrzeug kann bei der Ermittlung der Referenzgeschwindigkeit des Fahrzeuges im Antriebsfall auf die nicht angetriebenen Räder zurückgegriffen werden, da diese als freirollende Räder normalerweise schlupffrei sind. Dahingegen ist bei einem allradgetriebenen Fahrzeug die Auswahl des bzw. der geeigneten Räder schwieriger, da im Normalfall sämtliche Räder eines allradgetriebenen Fahrzeuges schlupfbehaftet sind.

Das erfindungsgemäße Verfahren bzw. die erfindungsgemäße Vorrichtung stellt ein Konzept dar, mit dem die Referenzgeschwindigkeit des Fahrzeuges für ein beliebig angetriebenes Fahrzeug, für einen beliebigen Betriebszustand des Fahrzeuges ermittelt werden kann. Dabei kann in dem Betriebszustand beispielsweise ein beliebiger Regelungseingriff eines beliebigen Schlupfreglers durchgeführt werden.

In Figur 1 ist ein Fahrzeug 101 mit Rädern 102vr, 102vl, 102hr bzw. 102hl dargestellt. Nachfolgend wird für die Räder des Fahrzeuges die vereinfachende Schreibweise 102ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend.

Jedem Rad 102ij ist ein Raddrehzahlsensor 103ij zugewiesen. Das vom jeweiligen Raddrehzahlsensor 103ij erzeugte Signal nij wird dem Steuergerät 104 zur weiteren Verarbeitung zugeführt. Zusätzlich sind den Rädern 102ij Aktuatoren 105ij zugewiesen, mit denen die auf die einzelnen Räder wirkenden Bremsmomente eingestellt werden können. Bei den Aktuatoren 105ij handelt es sich beispielsweise um Ventile zur Modulation des Radbremszylinderdruckes.

Ferner umfaßt das Fahrzeug einen Motor 106. Vom Motor 106 aus werden dem Steuergerät 104 Motordaten mot1 zugeführt. Außerdem weißt das Fahrzeug ein durch den Fahrer betätigbares Bremspedal 107 auf. Mit Hilfe eines Sensors 108 ist der vom Fahrer durch die Betätigung des Bremspedals 107 im Bremskreis eingestellte Vordruck erfaßbar. Der vom Sensor 108 erfaßte Vordruck wird dem Steuergerät 104 als Signal Pvor zugeführt.

Im Steuergerät 104 werden die ihm zugeführten Signale verarbeitet bzw. ausgewertet. Entsprechend der im Steuergerät implementierten Regelung werden verschiedene Stellsignale ausgegeben. Es ist denkbar, daß das Steuergerät 104 Stellsignale Aij erzeugt, mit denen die den Rädern 102ij zugeordneten Aktuatoren 105ij zur Einstellung von Bremsmomenten angesteuert werden. Außerdem ist die Ausgabe eines Stellsignals mot2 denkbar, mit dem das vom Motor 106 abgegebene Antriebsmoment beeinflußbar ist.

Die bisher im Zusammenhang mit Figur 1 beschriebene Sensorik stellt im Bezug auf das erfindungsgemäße Verfahren bzw. im Bezug auf die erfindungsgemäße Vorrichtung die im wesentlichen erforderliche Sensorik dar.

Wenn das Fahrzeug mit einem System zur Regelung des Bremsschlupfes bzw. mit einem System zur Regelung des Antriebsschlupfes ausgestattet ist, so sind die Raddrehzahlsensoren 103ij aufgrund dieser Systeme bereits vorhanden. Je nachdem, mit welchem der beiden Systeme das Fahrzeug ausgestattet ist, ist zusätzlich ein entsprechendes Mittel zur Aufnahme der Motordaten mot1 bzw. ein entsprechender Sensor 108 erforderlich.

Wenn das Fahrzeug mit einem System zur Regelung einer die Fahrdynamik des Fahrzeuges repräsentierenden Größe, insbesondere der Gierwinkelgeschwindigkeit des Fahrzeuges, ausgestattet ist, so sind ausgehend von den in Figur 1 dargestellten Sensoren zusätzlich wenigstens ein Drehraten- bzw. Gierratensensor und/oder ein Querbeschleunigungssensor sowie ein Lenkwinkelsensor erforderlich.

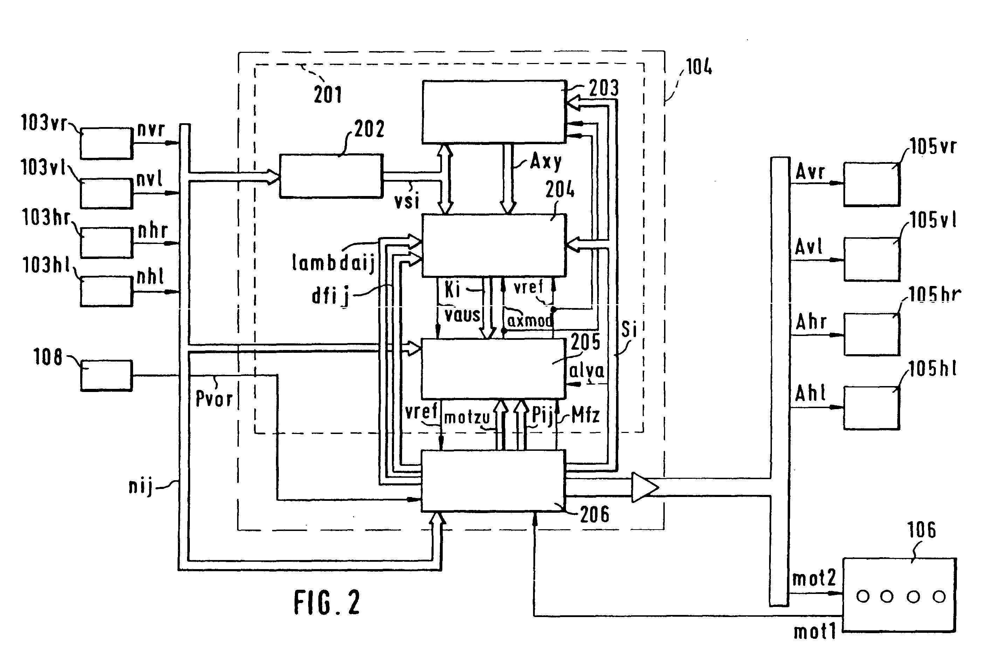

Bevor auf Figur 2 eingegangen wird, soll zunächst der dem erfindungsgemäßen Verfahren zugrundeliegende Ansatz zur Ermittlung der Referenzgeschwindigkeit des Fahrzeuges vorgestellt werden.

Die Ermittlung der Referenzgeschwindigkeit des Fahrzeuges basiert auf zwei voneinander unabhängigen Mechanismen.

Zum einen wird der aktuelle Wert der Referenzgeschwindigkeit des Fahrzeuges mit Hilfe eines ersten Mechanismus, modellgestützt aus dem Zusammenhang zwischen dem Drallsatz für ein Rad des Fahrzeuges und dem Impulssatz für das Fahrzeug ermittelt.

Der Drallsatz für ein Rad des Fahrzeuges, welches durch die beiden Indizes i bzw. j festgelegt ist, wird beispielsweise durch die Beziehung

$$Fij = Cp * Pij - Mij/Rij + Jij/Rij * d(vij)/dt \qquad (1)$$

beschrieben.

Hierbei gilt in Beziehung (1) folgende Zuordnung: Die Größe Fij entspricht der auf das entsprechende Rad wirkenden Radkraft. Die Größe Pij entspricht dem im entsprechenden Radbremszylinder vorherrschenden Druck. Dieser Radbremszylinderdruck kann beispielsweise mit Hilfe von Drucksensoren erfaßt werden, wozu hierfür jedem Rad ein entsprechender Sensor zuzuordnen ist. Alternativ kann der Radbremszylinderdruck auch in an sich bekannter Weise, wie es beispielsweise dem oben genannten, in der Automobiltechnischen Zeitschrift (ATZ) veröffentlichten Artikel entnommen werden kann, mit Hilfe eines Hydraulikmodells ermittelt werden. Dem Hydraulikmodell werden hierzu ein Wert für den vom Fahrer im Bremskreis eingestellten Vordruck sowie Werte für die Ansteuerzeiten der dem entsprechenden Rad zugeordneten Aktuatoren zugeführt. Im vorliegenden Ausführungsbeispiel wird der vom Fahrer im Bremskreis eingestellte Vordruck Pvor mit Hilfe des Sensors 108 ermittelt. Die Werte für die Ansteuerzeiten der dem entsprechenden Rad zugeordneten Aktuatoren werden im vorliegenden Ausführungsbeispiel in einem Block 206 ermittelt. Bei dieser Alternative sind für die Ermittlung der Radbremszylinderdrücke keine den Rädern zugeordnete Drucksensoren erforderlich. Die Größe Mij entspricht dem radbezogenen Kardanmoment. Dieses radbezogene Kardanmoment wird im vorliegenden Ausführungsbeispiel ausgehend von den Zustand des Motors kennzeichnenden Größen ermittelt. Zu den den Zustand des Motors kennzeichnenden Größen gehören wenigstens das Motorträgheitsmoment, das vom Motor erzeugte Drehmoment bzw. Antriebsmoment sowie die Motordrehzahl. Das Motorträgheitsmoment kann in Vorversuchen empirisch ermittelt werden. Die Motordrehzahl soll im vorliegenden Ausführungsbeispiel mit Hilfe eines bekannten und deshalb nicht näher beschriebenen Sensors erfaßt werden. Das vom Motor erzeugte Drehmoment wird ausgehend von der Motordrehzahl ermittelt. Die Größe vij stellt die Geschwindigkeit des entsprechenden Rades dar. Sie wird aus dem mit Hilfe des entsprechenden Raddrehzahlsensors 103ij ermittelten Signal nij im Block 205 ermittelt. Die Größe Cp, die einen die Bremsanlage repräsentierenden Bremsenkennwert darstellt, wird ebenso wie die Größe Jij, die das Radträgheitsmoment des entsprechenden Rades darstellt, im Vorfeld empirisch ermittelt. Die Größe Rij, die den Radius des entsprechenden Rades darstellt, kann im Vorfeld für alle Räder empirisch ermittelt werden.

Für den Fall, daß die den Zustand des Motors kennzeichnenden Größen, durch die der Antriebszustand und/ oder die Antriebskräfte des Fahrzeuges beschreibbar sind, nicht verfügbar sind, werden die auf die Räder wirkenden Radkräfte Fij, ausgehend von Beziehung (1) durch die Beziehung

$$Fij = Cp * Pij \qquad (1')$$

beschrieben. D.h. in diesem Fall werden durch die Größen Fij lediglich die auf die einzelnen Räder wirkenden Bremskräfte beschrieben.

Die den Zustand des Motors kennzeichnenden Größen sind beispielsweise dann nicht verfügbar, wenn entweder der Sensor zur Erfassung der Motordrehzahl fehlerhaft ist, oder wenn das Datenübertragungssystem, mit dem beispielsweise die mit Hilfe von Sensoren ermittelten Daten den einzelnen Blöcken zugeführt werden, fehlerhaft ist.

Der Impulssatz für ein Fahrzeug wird beispielsweise durch die Beziehung

$$axmod = (\Sigma Fij + Fwind)/Mfz \qquad (2)$$

beschrieben.

In Beziehung (2) gilt hierbei folgende Zuordnung: Die Größe axmod entspricht der Beschleunigung des Fahrzeuges. Der Ausdruck ΣFij stellt die Summe aller Radkräfte dar. Diese werden mit Hilfe der Beziehung (1) bzw. (1') ermittelt. Durch die Größe Fwind wird der Einfluß des Luftwiderstandes berücksichtigt. Die Größe Mfz entspricht der Masse des Fahrzeuges. Für diese Größe kann beispielsweise ein fest vorgegebener Wert verwendet werden, der empirisch ermittelt wurde. Ebenso ist es denkbar, den Wert der Größe Mfz unter Verwendung bekannter Schätzalgorithmen während des Fahrbetriebes des Fahrzeuges zu ermitteln.

Bei der Ermittlung der Größe axmod ist es unter Umständen sinnvoll, die Seitenkräfte zu berücksichtigen. Dies kann beispielsweise dadurch erfolgen, daß bei kleinem Schräglauf keine bis eine leichte Reduzierung, bei großem Schräglauf dagegen eine starke Reduzierung der Größe axmod in Abhängigkeit des Schräglaufes der Vorderachse durchgeführt wird. Der Schräglauf der Vorderachse kann beispielsweise durch einen Beobachter geschätzt werden. Hierzu werden als Eingangsgrößen wenigstens die Fahrzeuggeschwindigkeit und die Querbeschleunigung des Fahrzeuges benötigt. Die Querbeschleunigung kann in bekannter Weise beispielsweise mit Hilfe eines geeigneten Sensors ermittelt werden. Die Reduzierung der Größe axmod durch den funktionalen Zusammenhang zwischen Schräglauf der Vorderachse und Reduzierfaktor stellt eine speicherplatzoptimierte Möglichkeit für die Berücksichtigung von Seitenkrafteinflüssen dar. Selbstverständlich können die physikalischen Werte auch unter Berücksichtigung der Seitenkräfte und der Schräglaufsteifigkeiten ermittelt werden.

Beziehung (2) gilt allgemein. Für den Fall, daß die den Zustand des Motors kennzeichnenden Größen verfügbar sind, gehen in den Ausdruck ΣFij die nach Beziehung (1) ermittelten Radkräfte Fij ein.

Für den Fall, daß die den Zustand des Motors kennzeichnenden Größen nicht verfügbar sind, gehen in den Ausdruck ΣFij die nach Beziehung (1') ermittelten Radkräfte Fij ein. Dies hat in diesem Fall zur Folge, daß für ein gebremstes Fahrzeug die Beziehung (2) in ihrer Form unverändert bleibt. Dabei entsprechen die Radkräfte Fij den auf das jeweilige Rad wirkenden Bremskräfte bis auf ein eventuell vorhandenes Schleppmoment. Für ein beschleunigtes Fahrzeug reduziert sich die Beziehung (2) allerdings auf axmod = Fwind/Mfz, da in diesem Fall die Radkräfte Fij gleich Null sind.

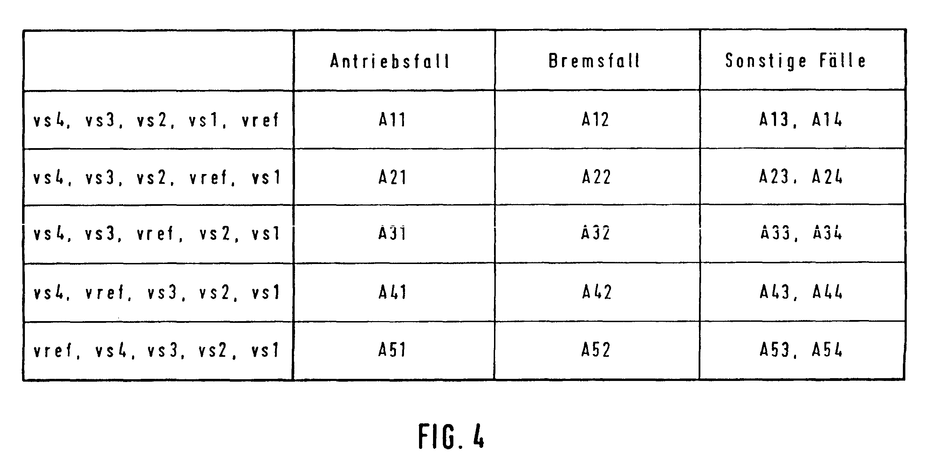

Da in die Beschreibung des Betriebszustandes des Fahrzeuges unter anderem die Größe axmod eingeht, muß ein Signal bereitgestellt werden, mit dem der Block, in dem der Betriebszustand des Fahrzeuges ermittelt wird, über den Zustand der Größe axmod informiert wird. Das heißt das Signal muß eine Information darüber enthalten, ob die Größe axmod vollständig beschrieben ist, oder ob die Größe axmod aufgrund der nicht verfügbaren, den Zustand des Motors kennzeichnenden Größen, lediglich teilweise beschrieben ist und somit bei der Ermittlung des Betriebszustandes des Fahrzeuges nicht verwendet werden kann. Auf dieses Signal wird im Zusammenhang mit der Beschreibung der Blöcke 203 bzw. 206 sowie der Figur 4 ausführlicher eingegangen.

Ausgehend von der mit Hilfe der Beziehung (2) ermittelten Beschleunigung des Fahrzeuges axmod wird die Referenzgeschwindigkeit des Fahrzeuges mit Hilfe der Beziehung

$$vref(n) = vref(n-1) + axmod(n) + axoff(n) \qquad (3)$$

gebildet.

In Beziehung (3) stellt der Ausdruck vref(n) den Wert für den aktuellen Zeitschritt n und der Ausdruck vref(n-1) den Wert für den vorigen Zeitschritt n-1 der Referenzgeschwindigkeit vref dar. Der Ausdruck axmod(n) stellt den Wert der mit der Beziehung (2) ermittelten Beschleunigung axmod des Fahrzeuges für den aktuellen Zeitschritt n dar. Der Ausdruck axoff(n) stellt den Wert einer noch zu beschreibenden Größe axoff für den aktuellen Zeitschritt n dar.

Mit dem zur Ermittlung der Referenzgeschwindigkeit des Fahrzeuges verwendeten ersten Mechanismus, einer modellgestützten Extrapolation, kann in Alleinstellung die Ermittlung der Referenzgeschwindigkeit des Fahrzeuges nicht ohne weiteres sichergestellt werden. Denn bei diesem Mechanismus bleiben Einflüsse wie beispielsweise die Neigung der Fahrbahn oder der Beladungszustand des Fahrzeuges oder auch fehlerbehaftete Schätzgrößen bzw. Sensorsignale größtenteils unberücksichtigt. Aus diesem Grund wird für die Ermittlung der Referenzgeschwindigkeit des Fahrzeuges zusätzlich ein zweiter Mechanismus herangezogen. Mit Hilfe dieses zweiten Mechanismus wird eines der Räder des Fahrzeuges ausgewählt, welches zur Stützung bzw. zur Ermittlung der Referenzgeschwindigkeit des Fahrzeuges verwendet wird.

Die Auswahl eines Rades des Fahrzeuges mit Hilfe des zweiten Mechanismus wird noch im Zusammenhang mit Figur 4 ausführlich beschrieben. An dieser Stelle soll lediglich die dem zweiten Mechanismus zugrundeliegende Vorgehensweise kurz aufgezeigt werden. In Abhängigkeit verschiedener Größen, wie beispielsweise den Geschwindigkeiten vij der Räder, der Referenzgeschwindigkeit vref des Fahrzeuges sowie einer weiteren, wenigstens in Abhängigkeit der Geschwindigkeiten vij ermittelten Größe, die die Beschleunigung des Fahrzeuges beschreibt, wird der Betriebszustand des Fahrzeuges ermittelt. Wenigstens für einen Teil der so ermittelten Betriebszustände werden Plausibilitätsabfragen durchgeführt. Wenigstens in Abhängigkeit dieser Betriebszustände, und sofern durchgeführt, in Abhängigkeit der Plausibilitätsabfragen, wird das Rad des Fahrzeuges ermittelt, welches zu dem Zeitpunkt der Ermittlung der Referenzgeschwindigkeit des Fahrzeuges hierfür am besten geeignet ist.

Ausgehend von der Geschwindigkeit vaus des ausgewählten Rades wird die Größe axoff für den Zeitschritt n beispielsweise gemäß der Beziehung

$$axoff(n) = axoff(n-1) + koax * (vaus(n) - vref(n-1)) \qquad (4)$$

gebildet.

Die Größe axoff, die eine die Beschleunigung des Fahrzeuges beschreibende Größe darstellt, stellt für die mit der Beziehung (2) ermittelte Größe axmod einen Fehlerkorrekturterm dar.

Wie Beziehung (4) zeigt, hängt der Wert des Ausdruckes axoff(n) der Größe axoff für den aktuellen Zeitschritt n vom Wert des Ausdruckes axoff(n-1) und einer mit einem ersten Faktor koax bewerteten Geschwindigkeitsdifferenz ab. Diese Geschwindigkeitsdifferenz wird in Abhängigkeit des Ausdruckes vaus(n), der den Wert der Geschwindigkeit vaus des ausgewählten Rades zum aktuellen Zeitschritt n beschreibt, und des Ausdruckes vref(n-1), d.h. dem Wert der Referenzgeschwindigkeit vref für den Zeitschritt n-1 gebildet.

Gemäß der mit Hilfe der Beziehung (4) gezeigten Ermittlung der Größe axoff, diese Art der Ermittlung wird auch als Stützung der Größe axoff durch die Geschwindigkeit vaus des ausgewählten Rades bezeichnet, findet, ausgehend von dem mit der Beziehung (3) ermittelten Wert vref(n) für die Referenzgeschwindigkeit des Fahrzeuges, eine entsprechende Stützung statt. Diese wird beispielsweise durch die Beziehung

$$vref(n+1) = vref(n) + kovx * (vaus(n) - vref(n-1)) \qquad (5)$$

beschrieben.

Der Wert des Ausdruckes vref(n+1), der den Wert der Referenzgeschwindigkeit vref des Fahrzeuges für den nachfolgenden Zeitschritt n+1 darstellt, hängt vom Wert des Ausdruckes vref(n) und einer mit einem zweiten Faktor kovx bewerteten Geschwindigkeitsdifferenz ab. Diese Geschwindigkeitsdifferenz entspricht der in Beziehung (4).

Sowohl der Wert des ersten Faktors koax, als auch der des zweiten Faktors kovx werden, wie das ausgewählte Rad, mit Hilfe des zweiten Ansatzes ermittelt. Ergibt sich anhand der Plausibilitätsabfragen, daß der Geschwindigkeitsverlauf des ausgewählten Rades für die Stützung der Referenzgeschwindigkeit des Fahrzeuges besonders plausibel ist, so werden beiden Faktoren große Werte zugewiesen. Ist der Geschwindigkeitsverlauf des ausgewählten Rades weniger plausibel, so werden den beiden Faktoren entsprechend kleinere Werte zugewiesen. Ist gar kein Rad zur Stützung geeignet, so wird den beiden Faktoren der Wert Null zugewiesen. Über die beiden Faktoren wird somit festgelegt, in welchem Maße das ausgewählte Rad in die Ermittlung der Referenzgeschwindigkeit des Fahrzeuges eingeht.

An dieser Stelle sei darauf hingewiesen, daß die für die Beziehungen (1), (1') bzw. (2) gewählte zeitkontinuierliche Darstellung, keine Einschränkung in der Weiterverarbeitung der mit Hilfe dieser Beziehungen ermittelten Größen Fij bzw. axmod darstellt. Die im Zusammenhang mit den Beziehungen (3) bis (5) benötigten zeitdiskreten Werte dieser Größen können in den entsprechenden, in Figur 2 gezeigten Blöcken bereitgestellt werden.

Durch Einsetzen der Beziehungen (3) und (4) in die Beziehung (5) ergibt sich folgende Darstellung für den Wert der Referenzgeschwindigkeit vref des Fahrzeuges für den Zeitschritt n+1:

$$vref(n+1) = [vref(n-1) + kovx * (vaus(n) - vref(n-1))]$$

$$+ [axoff(n-1) + axmod(n)$$

$$+ koax * (vaus(n) - vref(n-1))]$$

$$= vvant(n+1) + vaant(n+1) \tag{6}$$

Gemäß Beziehung (6) läßt sich die Ermittlung der Referenzgeschwindigkeit des Fahrzeuges folgendermaßen darstellen: Der Wert vref(n+1) der Referenzgeschwindigkeit des Fahrzeuges für den Zeitschritt n+1 läßt sich in Abhängigkeit eines die Geschwindigkeit des Fahrzeuges beschreibenden Anteils vvant(n+1), der erste Ausdruck in eckigen Klammern, und in Abhängigkeit eines die Beschleunigung des Fahrzeuges beschreibenden Anteils vaant(n+1), der zweite Ausdruck in eckigen Klammern, ermitteln. Der erste Anteil, der die Geschwindigkeit des Fahrzeuges beschreibt, setzt sich, bezogen auf den Zeitschritt n+1, aus einem vorhergehenden Wert für die Referenzgeschwindigkeit des Fahrzeuges und der mit einem ersten Faktor kovx bewerteten, bereits oben beschriebenen Differenz zusammen. Der zweite Anteil, der die Beschleunigung des Fahrzeuges beschreibt, setzt sich aus einem Wert der Größe axoff für einen vorhergehenden Zeitschritt, aus einem Wert der Größe axmod für einen vorhergehenden Zeitschritt und aus der mit einem zweiten Faktor koax bewerteten, bereits oben beschriebenen Differenz zusammen.

Handelt es sich bei dem im Fahrzeug implementierten Regelungssystem um ein System zur Regelung des Bremsschlupfes oder führt ein übergeordnetes Regelungssystem, beispielsweise ein übergeordnetes Regelungssystem zur Regelung einer die Fahrdynamik des Fahrzeuges beschreibenden Größe, mit Hilfe eines untergeordneten Bremsschlupfreglers eine Bremsschlupfregelung durch, so kann in diesen Fällen vorteilhafterweise zu den beiden oben beschriebenen Mechanismen ein weiterer hinzukommen. Bei diesem weiteren Mechanismus wird eine zusätzliche Stützung der Referenzgeschwindigkeit des Fahrzeuges in Abhängigkeit der Geschwindigkeit eines Rades vorgenommen. Dieses Rad wird bei diesem weiteren Mechanismus in bekannter Weise in sogenannten Anpassungsphasen durch gezieltes Unterbremsen einzelner Räder, d.h. durch gezielten Druckabbau im Radbremszylinder dieser Räder, ermittelt. Dabei kann das auf diese Art ermittelte Rad von dem, mit Hilfe des zweiten Mechanismus ermittelten verschieden sein.

Die mit dem erfindungsgemäßen Verfahren bzw. mit der erfindungsgemäßen Vorrichtung ermittelte Referenzgeschwindigkeit des Fahrzeuges wird in den bereits oben erwähnten Regelungssystemen beispielsweise für die Bildung der Schlupfwerte der Räder eingesetzt.

In Figur 2 ist die Strukturierung des zur Durchführung des erfindungsgemäßen Verfahrens bzw. des für die erfindungsgemäße Vorrichtung benötigten Steuergeräts 104 dargestellt. Im wesentlichen ist das Steuergerät in zwei Bereiche gegliedert. Der eine Bereich 201 umfaßt die erfindungswesentlichen Blöcke. Hierbei handelt es sich um die Blöcke 202, 203, 204 sowie 205. Der andere Bereich wird durch einen Block 206 gebildet, der im wesentlichen den Regler des implementierten Regelungssystems repräsentiert. Außerdem zeigt Figur 2 die für das erfindungsgemäße Verfahren bzw. für die erfindungsgemäße Vorrichtung im wesentlichen erforderliche Sensorik. Diese kann, wie bereits oben erwähnt, ausgehend von der Sensorik des implementierten Schlupfregelsystems um weitere Sensoren erweitert sein.

An dieser Stelle sei darauf hingewiesen, daß die in der Figur 2 eingezeichneten Größen nicht zeitdiskret dargestellt sind. Die gemäß den Beziehungen (3) bis (5) benötigten zeitdiskreten Werte für verschiedene Größen werden in den entsprechenden Blöcken ermittelt.

Die mit den Raddrehzahlsensoren 103ij erzeugten Signale nij, die die Raddrehzahlen der jeweiligen Räder 102ij repräsentieren, werden noch zu beschreibenden Blöcken 202, 205 bzw. 206 zugeführt. Ebenfalls wird das mit Hilfe des Sensors 108 erzeugte Signal Pvor, welches den vom Fahrer im Bremskreis eingestellten Vordruck darstellt, dem Block 206 zugeführt.

In dem Block 202 werden die Raddrehzahlen nij in die Geschwindigkeiten der Räder repräsentierende Größen vij umgerechnet und ihrer Größe nach sortiert. Da es sich bei den Größen vij um interne Größen des Blockes 202 handelt, sind diese in Figur 2 nicht gezeigt. Die der Größe nach sortierten Radgeschwindigkeiten vij werden als Größen vsi vom Block 202 aus den Blöcken 203 bzw. 204 zugeführt. Für die nach der Größe sortierten Größen vsi soll beispielsweise folgende Zuordnung gelten: Der Größe vs1 sei die Geschwindigkeit des langsamsten Rades, d.h. die kleinste Radgeschwindigkeit vij zugeordnet. Der Größe vs2 sei die Geschwindigkeit des zweitlangsamsten Rades, der Größe vs3 die Geschwindigkeit des zweitschnellsten und der Größe vs4 die Geschwindigkeit des schnellsten Rades, d.h. die größte Radgeschwindigkeit vij zugeordnet. Diese Zuordnung läßt sich durch die Relation vs1 < vs2 < vs3 < vs4 ausdrücken.

Ausgehend von den der Größe nach sortierten Radgeschwindigkeiten vsi werden im Block 203 Betriebszustände Axy des Fahrzeuges ermittelt, die dem Block 204 zugeführt werden. In die Ermittlung der Betriebszustände Axy gehen neben den Größen vsi weitere Größen wie beispielsweise die im Block 205 ermittelte Referenzgeschwindigkeit vref des Fahrzeuges, die ebenfalls im Block 205 ermittelte Größe axmod sowie im Block 206 ermittelte Signale Si ein. Die Signale Si enthalten wenigstens ein Signal, mit dem, wie bereits oben erwähnt, der Block 203 über den Zustand der Größe axmod informiert wird. Auf die im Block 203 ablaufende Ermittlung der Betriebszustände Axy wird im Rahmen der Beschreibung der Figur 4 ausführlicher eingegangen.

Im Block 204 laufen ausgehend von den Betriebszuständen Axy folgende Ermittlungen ab: Zum einen wird dasjenige Rad des Fahrzeuges ausgewählt, welches zur Ermittlung bzw. zur Stützung der Referenzgeschwindigkeit des Fahrzeuges verwendet wird. Zum anderen werden die bereits erwähnten Faktoren kovx bzw. koax ermittelt. Sowohl die Geschwindigkeit vaus des ausgewählten Rades als auch die beiden Faktoren kovx bzw. koax, die beiden Faktoren sind in Figur 2 zu der Größe Ki zusammengefaßt, werden dem Block 205 zugeführt.

Zur Auswahl des für die Stützung bzw. Ermittlung der Referenzgeschwindigkeit des Fahrzeuges verwendeten Rades bzw. für die Ermittlung der Faktoren kovx bzw. koax werden wenigstens für einen Teil der Betriebszustände Axy im Block 204 Plausibilitätsabfragen durchgeführt. Für einen Teil der Betriebszustände Axy sind solche Plausibilitätsabfragen allerdings nicht erforderlich, da für diese Betriebszustände beispielsweise entweder das ausgewählte Rad aufgrund des Betriebszustandes schon von vornherein feststeht oder aufgrund des Betriebszustandes keine Stützung der Referenzgeschwindigkeit durch ein Rad des Fahrzeuges als sinnvoll erscheint.

In die Plausibilitätsabfragen gehen neben den der Größe nach sortierten Radgeschwindigkeiten vsi weitere Größen ein. So werden dem Block 204 ausgehend vom Block 205 hierzu beispielsweise die Referenzgeschwindigkeit vref des Fahrzeuges bzw. die Größe axmod zugeführt. Ferner werden dem Block 204 zu diesem Zweck ausgehend vom Block 206 die Schlupfwerte der einzelnen Räder beschreibende Größen lambdaij bzw. Signale dfij, die den Ausfall einzelner Raddrehzahlsensoren 103ij anzeigen, zugeführt. Desweiteren erhält der Block 204 zur Durchführung der Plausibilitätsabfragen vom Block 206 Signale Si. In diesem Zusammenhang ist zu beachten, daß es sich bei den Signalen Si um eine Zusammenfassung verschiedener, noch zu beschreibender Signale handelt, und daß es durchaus vorkommen bzw. sinnvoll sein kann, wenn in den Blöcken 203 bzw. 204 verschiedene dieser Signale verarbeitet werden.

Die unter der Bezeichnung Si zusammengefaßten Signale bzw. Größen können beispielsweise eine Größe enthalten, die den bereits erwähnten Schräglauf der Vorderachse beschreibt bzw. Signale enthalten, die eine Information darüber abgeben, ob für den betrachteten Zeitschritt ein Eingriff der Bremsschlupfregelung und/oder ein Eingriff der Antriebsschlupfregelung und/oder ein Eingriff eines übergeordneten Regelungssystems vorliegt. Ferner können die Signale Si eine Information über den Schräglauf einzelner Räder bzw. der Vorderachse bzw. eine Information über die Anzahl der geregelten Räder bzw. eine Information über das auf das entsprechende Rad wirkende Moment bzw. eine Information bzgl. des Beschleunigungsverhaltens des Fahrzeuges, insbesondere darüber, ob sich das Fahrzeug in dem betrachteten Zeitschritt in einem Übergang von Verzögerung nach Beschleunigung befindet, enthalten. Weitere in den Signalen Si enthaltene Signale werden weiter unter besprochen.

Als Plausibilitätsabfragen werden beispielsweise folgende Abfragen verwendet: Durch Vergleiche der sortierten Radgeschwindigkeiten vsi untereinander bzw. mit der Referenzgeschwindigkeit vref kann überprüft werden, ob sich die Radgeschwindigkeiten zueinander bzw. zur Referenzgeschwindigkeit plausibel verhalten, d.h. ob sie zueinander synchron und jeweils stabil sind. Hierzu bietet sich beispielsweise die Ermittlung des Abstandes einzelner Radgeschwindigkeiten untereinander bzw. der Abstand einzelner Radgeschwindigkeiten zur Referenzgeschwindigkeit an. Beispielsweise ist ein geringer Abstand einer Radgeschwindigkeit von der Referenzgeschwindigkeit ein Indiz dafür, daß sich diese Geschwindigkeit für die Stützung der Referenzgeschwindigkeit eignen könnte. Außerdem bietet sich an, in Abhängigkeit der Geschwindigkeiten der Räder eine mittlere Radbeschleunigung zu ermitteln, die in die Plausibilitätsabfragen beispielsweise zur Erkennung von Lastwechseln eingeht.

Ferner lassen sich ausgehend von den Schlupfwerten lambdaij verschiedene Plausibilitätsabfragen realisieren. Beispielsweise kann ausgehend von den einzelnen Schlupfwerten lambdaij festgestellt werden, welche Räder sich instabil verhalten und somit für eine Stützung der Referenzgeschwindigkeit weniger gut geeignet sind. Außerdem ist über einen Vergleich der Summe der einzelnen Schlupfwerte lambdaij mit der Summe der Absolutwerte der einzelnen Schlupfwerte feststellbar, ob sich die Räder des Fahrzeuges in einem stabilen Zustand befinden oder nicht.

Ausgehend von den Signalen dfij, mit denen angezeigt wird, ob bzw. welcher der Raddrehzahlsensoren 103ij eventuell fehlerbehaftet ist, lassen sich über Abfragen die Räder ermitteln, deren Geschwindigkeiten für eine Stützung der Referenzgeschwindigkeit nicht in Frage kommen.

Auch läßt sich durch einen Vergleich des Schräglaufs eines Rades mit einem vorgegebenen Schwellenwert feststellen, ob das entsprechende Rad zur Stützung der Referenzgeschwindigkeit geeignet ist oder nicht.. Dabei kann der Schräglauf einzelner Räder entsprechend dem Schräglauf der Vorderachse ermittelt werden. Unter Berücksichtigung der Größe axmod, die eine die Beschleunigung des Fahrzeuges beschreibende Größe darstellt, läßt sich auch ermitteln, ob einzelne Räder für die Stützung der Referenzgeschwindigkeit geeignet sind oder nicht.

Die Aufzählung obiger Plausibilitätsabfragen stellt keine umfassende Aufzählung dar und soll nicht einschränkend sein. Es ist durchaus denkbar weitere Plausibilitätsabfragen einzusetzen. Ebenfalls ist es denkbar, für die Ermittlung des ausgewählten Rades bzw. für die Ermittlung der beiden Faktoren jeweils unterschiedliche Plausibilitätsabfragen zu verwenden. Je nach Betriebszustand Axy kann es dann folglich vorkommen, daß für die Ermittlung des ausgewählten Rades bzw. für die Ermittlung der beiden Faktoren dieselben bzw. verschiedene Plausibilitätsabfragen verwendet werden.

In dem Block 205 wird die die Geschwindigkeit des Fahrzeuges beschreibende Größe, die Referenzgeschwindigkeit vref ermittelt. Hierzu wird dem Block 205 ausgehend vom Block 204 die Geschwindigkeit vaus des ausgewählten Rades, sowie über die Größe Ki sowohl der erste Faktor koax als auch der zweite Faktor kovx zugeführt. Von den Raddrehzahlsensoren 103ij erhält der Block 205 die Signale nij, die intern in die Geschwindigkeiten der Räder beschreibende Größen vij umgesetzt werden. Ferner werden dem Block 205 ausgehend vom Block 206 den Zustand des Motors beschreibende Größen motzu, die Radbremszylinderdrücke beschreibende Größen Pij, sowie eine die Masse des Fahrzeuges beschreibende Größe Mfz zugeführt. Als den Zustand des Fahrzeuges beschreibende Größen motzu können dem Block 205 beispielsweise das vom Motor erzeugte Drehmoment sowie die Motordrehzahl zugeführt werden. Ausgehend von den oben genannten Größen wird im Block beispielsweise gemäß den Beziehungen (1) bzw. (1') bis (5) die Referenzgeschwindigkeit vref des Fahrzeuges ermittelt und sowohl an den Block 204 als auch an den Block 206 ausgegeben.

Ausgehend von den Größen Pij bzw. vij und unter Berücksichtigung der Größe Mij, die wenigstens in Abhängigkeit der den Zustand des Motors kennzeichnenden Größen motzu gebildet wird, werden gemäß Beziehung (1) die die einzelnen Radkräfte beschreibenden Größen Fij gebildet. Falls die den Zustand des Motors kennzeichnenden Größen motzu nicht verfügbar sind, werden die Größen Fij gemäß Beziehung (1') ermittelt. Die Größen Fij gehen neben der die Masse des Fahrzeuges beschreibenden Größe Mfz in die durch die Beziehung (2) beschriebene Ermittlung der Größe axmod ein, die die Beschleunigung des Fahrzeuges beschreibt. Ebenfalls wird im Block 205 gemäß der Beziehung (4) wenigstens ausgehend von der Geschwindigkeit vaus des ausgewählten Rades die Größe axoff gebildet. Ausgehend von den Beziehungen (3) bzw. (5) ergibt sich die Referenzgeschwindigkeit des Fahrzeuges.

Alternativ kann dem Block 205 ausgehend vom Block 206 zusätzlich eine Größe alva zugeführt werden. Diese Größe beschreibt den Schräglauf an der Vorderachse und kann bei der Ermittlung der Größe axmod berücksichtigt werden, was folglich zu einer Beeinflussung der Referenzgeschwindigkeit des Fahrzeuges führt. Wie bereits beschrieben, kann die Größe alva wenigstens in Abhängigkeit der Fahrzeuggeschwindigkeit und der Querbeschleunigung des Fahrzeuges ermittelt werden. Der hierfür eventuell erforderliche Querbeschleunigungssensor ist in Figur 2 nicht dargestellt.

Der Block 206 stellt den für das im Fahrzeug implementierte Regelungssystem eingesetzten Regler dar. Als Eingangsgrößen werden dem Block 206 die mit den Raddrehzahlsensoren 103ij erzeugten Signale nij sowie die mit Hilfe des Sensors 108 ermittelte Größe Pvor zugeführt. Ferner wird dem Block 206 ausgehend vom Block 205 die Referenzgeschwindigkeit vref zugeführt. Vom Motor erhält er eine Größe mot1, bei der es sich beispielsweise um die Motordrehzahl handeln kann.

Ausgehend von der Motordrehzahl kann im Block 206 beispielsweise eine Größe, die das vom Motor erzeugte Drehmoment bzw.

Antriebsmoment beschreibt, ermittelt werden, und die zusammen mit der Motordrehzahl als Größen motzu dem Block 205 zugeführt werden. Ferner werden im Block 206 ausgehend von der Größe Pvor und unter Berücksichtigung der im Block 206 für die Aktuatoren 105ij ermittelten Ansteuersignale Aij, die beispielsweise die Ansteuerzeiten der Aktuatoren beschreiben, unter Verwendung eines hydraulischen Modells die Radbremszylinderdrücke Pij ermittelt. Wenigstens in Abhängigkeit der Raddrehzahlen nij bzw. des vom Motor erzeugten Momentes wird im Block 206 mit: Hilfe eines geeigneten Schätzverfahrens die die Masse des Fahrzeuges beschreibende Größe Mfz ermittelt. Ferner werden im Block 206 die bereits erwähnten Signale Si ermittelt. In die Ermittlung der Signale Si gehen wenigstens die Größen nij bzw. die den Zustand des Motors kennzeichnenden Größen motzu ein. Ebenso werden reglerinterne Größen berücksichtigt, die beispielsweise eine Information über vom Regelungssystem durchgeführte Reglereingriffe enthalten.

In diesem Zusammenhang sei auf ein in den Signalen Si enthaltenes Signal hingewiesen, welches dem Block 203 zugeführt wird, und welches diesen über den Zustand der Größe axmod informiert. Dieses Signal wird wenigstens in Abhängigkeit der Motordrehzahl nmot gebildet. Beispielsweise wird hierfür die Motordrehzahl auf Plausibilität überwacht. Werden unplausible Motordrehzahlen festgestellt, so ist dies ein Zeichen dafür, daß beispielsweise der zur Erfassung der Motordrehzahl eingesetzte Sensor fehlerhaft ist. In diesem Fall sind die den Zustand des Motors kennzeichnenden Größen nicht verfügbar, die Größe axmod wird unter Verwendung der Größen Fij gemäß Beziehung (1') ermittelt. Folglich wird durch das in den Signalen Si enthaltene Signal dem Block 203 mitgeteilt, daß die Größe axmod nicht verwendet werden kann. Ist dagegen die Motordrehzahl plausibel, d.h. sind die den Zustand des Motors kennzeichnenden Größen verfügbar, so gehen in die Beziehung (2) die Größen Fij gemäß Beziehung (1) ein. In diesem Fall wird dem Block 203 mitgeteilt, daß die Größe axmod verwendet werden kann. Zusätzlich zur Überwachung der die Motordrehzahl beschreibenden Größe bietet sich eine Plausibilitätsabfrage bzgl. der fehlerfreien Funktion des Datenübertragungssystems an.

Ferner erzeugt der Block 206 wenigstens in Abhängigkeit der Raddrehzahlen nij die den Schlupf der Räder beschreibende Größen lambdaij. Die Signale dfij, mit denen ein Fehler des entsprechenden Raddrehzahlsensors 103ij angezeigt wird, kann der Block 206 beispielsweise ausgehend von den Größen nij durch Plausibilitätsabfragen erzeugen.

Außerdem erzeugt der Block 206 entsprechend dem implementierten Regelungssystem beispielsweise wenigstens ausgehend von den Signalen nij und der Referenzgeschwindigkeit vref des Fahrzeuges Ansteuersignale Aij für die Aktuatoren 105ij bzw. ein Signal mot2 zur Beeinflussung des vom Motor 106 erzeugten Antriebsmomentes. Durch die Aktuatoren Aij kann die auf das entsprechende Rad wirkende Bremskraft eingestellt werden. Durch die Beeinflussung der Radkräfte und des vom Motor erzeugten Antriebsmomentes können die Schlüpfe der einzelnen Räder bzw. der Summenschlupf geregelt werden. Je nachdem, um welche Art von Regelungssystem es sich handelt, können dem Block 206 weitere für die Regelung benötigte Größen zugeführt werden bzw. kann der Block 206 weitere für die Regelung benötigte Größen erzeugen.

An dieser Stelle sei darauf hingewiesen, daß die im Ausführungsbeispiel aufgezeigte Verwendung des erfindungsgemäßen Verfahrens bzw. der erfindungsgemäßen Vorrichtung keine Einschränkung darstellen soll. Es ist denkbar, das erfindungsgemäße Verfahren bzw. die erfindungsgemäße Vorrichtung auch in anderen Systemen einzusetzen, bei denen ebenfalls eine die Geschwindigkeit des Fahrzeuges beschreibende Größe erforderlich ist.

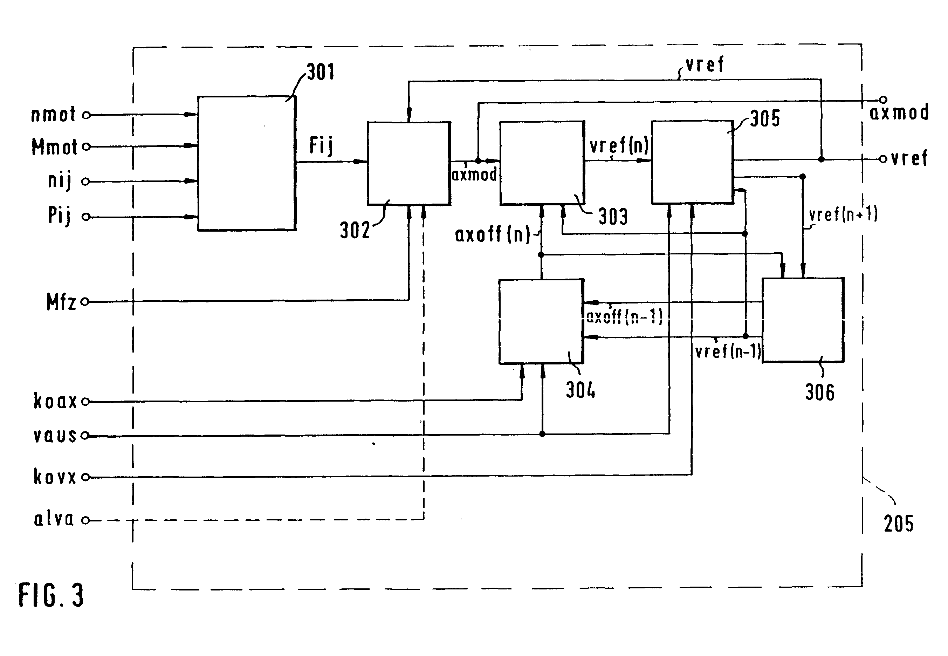

In Figur 3 ist die im Block 205 stattfindende Ermittlung der Referenzgeschwindigkeit vref des Fahrzeuges bzw. der Größe axmod ausführlich dargestellt. Hierbei sind im wesentlichen die Beziehungen (1) bzw. (1') bis (5) zu berücksichtigen.

In einem Block 301 werden beispielsweise gemäß der Beziehung (1), ausgehend von der Motordrehzahl nmot bzw. von dem vom Motor erzeugten Drehmomentes Mmot, die beide den Zustand des Motors kennzeichnen und die beide in die Ermittlung der Größen Mij eingehen, sowie ausgehend von den Raddrehzahlen nij, die im Block 301 in die Radgeschwindigkeiten vij umgerechnet werden bzw. den Radbremszylinderdrücken Pij die Radkräfte Fij gebildet. Diese Radkräfte Fij werden einem Block 302 zugeführt. Sind die den Zustand des Motors kennzeichnenden Größen nicht verfügbar, so werden die Radkräfte gemäß Beziehung (1') ermittelt.

Dem Block 302 werden ferner die die Masse des Fahrzeuges beschreibende Größe Mfz sowie die Referenzgeschwindigkeit vref zugeführt. In Abhängigkeit der ihm zugeführten Größen wird im Block 302 beispielsweise gemäß der Beziehung (2) die die Beschleunigung des Fahrzeuges beschreibende Größe axmod gebildet. Die Größe axmod wird einem Block 303 zugeführt, außerdem wird sie für weitere, sich außerhalb des Blockes 205 befindliche Blöcke bereitgestellt.

Dem Block 302 kann als zusätzliche Größe alternativ die Größe alva, die den Schräglauf an der Vorderachse des Fahrzeuges beschreibt, zugeführt werden. In Abhängigkeit dieser Größe alva kann eine Korrektur der Größe axmod vorgenommen werden.

In dem Block 303 wird zunächst ausgehend von der Größe axmod der Wert axmod(n) dieser Größe für einen Zeitschritt n bestimmt. Zusammen mit einem Wert axoff(n) der Größe axoff und einem Wert vref(n-1) der Referenzgeschwindigkeit zum Zeitschrift n-1 wird im Block 303 der Wert vref(n) der Referenzgeschwindigkeit für den Zeit:schritt n beispielsweise gemäß der Beziehung (3) ermittelt. Dieser Wert vref(n) wird einem Block 305 zugeführt.

In einem Block 304 wird der bereits erwähnte Wert axoff(n) der Größe axoff für den Zeitschritt n ermittelt. Hierzu werden dem Block 304 der Faktor koax, die Geschwindigkeit vaus des ausgewählten Rades, der Wert axoff(n-1) der Größe axoff sowie der Wert vref(n-1) der Referenzgeschwindigkeit für den Zeitschritt n-1 zugeführt. Ausgehend von der Größe vaus wird im Block 304 zunächst der Wert vaus(n) für den Zeitschritt n ermittelt. In Abhängigkeit der im Block 304 vorliegenden Größen wird beispielsweise gemäß Beziehung (4) der Wert axoff(n) der Größe axoff für den Zeitschritt n ermittelt. Der Wert axoff(n) wird sowohl dem Block 303 als auch dem Block 306 zugeführt.

Dem Block 305 werden neben dem Wert vref(n) der Referenzgeschwindigkeit für den Zeitschritt n die Geschwindigkeit vaus des ausgewählten Rades, der Faktor kovx sowie der Wert vref(n-1) der Referenzgeschwindigkeit für den Zeitschritt n-1 zugeführt. Im Block 305 wird zunächst ausgehend von der Geschwindigkeit vaus der Wert vaus (n) dieser Größe für den Zeitschritt n ermittelt. In Abhängigkeit der im Block 305 vorliegenden Größen wird beispielsweise gemäß der Beziehung (5) der Wert vref(n+1) der Referenzgeschwindigkeit für den Zeitschritt n+1 ermittelt. Dieser Wert vref(n+1) wird dem Block 306 zugeführt. Ferner wird vom Block 305 ein zeitkontinuierliches Signal vref für die Referenzgeschwindigkeit ausgegeben. Dieses kann aus den zeitdiskreten Werten vref(n+1) beispielsweise mit Hilfe eines Haltegliedes erzeugt werden. Das Signal bzw. die Größe vref wird dem Block 302 zugeführt, ferner wird es bzw. sie für weitere Blöcke außerhalb des Blockes 205 bereitgestellt.

In dem Block 306 werden die Werte axoff(n) bzw. vref(n+1) gespeichert. Der Wert axoff(n) steht somit für den Block 304 für einen nachfolgenden Zeitschritt zur Verfügung. Ebenso steht der Wert vref(n+1) für die Blöcke 303, 304 bzw. 305 für einen nachfolgenden Zeitschritt zur Verfügung.

Im Falle der Initialisierung des gesamten Regelungssystems, was beispielsweise zu Fahrtbeginn nach Drehen des Zündschlüssels erfolgt, können den entsprechenden, für die rekursive Bildung der Größen axoff bzw. vref benötigten Größen, geeignete Startwerte zugewiesen werden.

Figur 4 zeigt in einer schematisierten Darstellung in Form einer Matrix, die im Block 203 ablaufende Ermittlung der Betriebszustände Axy des Fahrzeuges. Im wesentlichen werden die Betriebszustände Axy in Abhängigkeit der Geschwindigkeiten der Räder ermittelt.

Ein erstes Kriterium zur Ermittlung des jeweiligen Betriebszustandes Axy wird ausgehend von den der Größe nach sortierten Geschwindigkeiten vsi und der Referenzgeschwindigkeit vref gebildet. Dazu wird die Referenzgeschwindigkeit vref mit den Geschwindigkeiten vsi verglichen und entsprechend einsortiert. Durch diesen Vergleich ergeben sich im vorliegenden Ausführungsbeispiel 5 verschiedene Gruppierungen von Betriebszuständen. In der gewählten Matrixdarstellung entsprechen diese den Zeilen mit den jeweiligen Betriebszuständen A1y, A2y, A3y, A4y bzw. A5y.

Zur eindeutigen Ermittlung des jeweiligen Betriebszustandes Axy ist ein weiteres, zweites Kriterium erforderlich. Dieses zweite Kriterium stützt sich im wesentlichen auf die die Beschleunigung des Fahrzeuges beschreibende Größe axmod.

Im wesentlichen wird in Abhängigkeit der Größe axmod festgestellt, ob sich das Fahrzeug zu dem Zeitpunkt, in dem die Referenzgeschwindigkeit vref ermittelt werden soll, in einem gebremsten Zustand, dem "Bremsfall", bzw. in einem beschleunigten Zustand, dem "Antriebsfall", befindet. Die Betriebszustände im "Antriebsfall" werden mit Ax1, die des "Bremsfalles" mit Ax2 gekennzeichnet.

Zur Verfeinerung dieser Abfrage können weitere Größen wie beispielsweise die auf die Räder des Fahrzeuges wirkenden Momente herangezogen werden. Diese Radmomente werden beispielsweise im Block 206 wenigstens in Abhängigkeit der Radbremszylinderdrücke Pij bzw. des vom Motor erzeugten Momentes ermittelt und dem Block 203 über die Signale Si zugeführt.

Läßt sich ausgehend von der Größe axmod nicht eindeutig feststellen, ob sich das Fahrzeug in einem gebremsten bzw. beschleunigten Zustand befindet, so wird zur Beschreibung des Betriebszustandes des Fahrzeuges aus den "Sonstigen Fällen" der entsprechende Betriebszustand Ax3 gewählt.

Für die Ermittlung der Betriebszustände Ax1, Ax2 bzw. Ax3 wird die die Beschleunigung des Fahrzeuges beschreibende Größe axmod benötigt. Für den Fall, daß die Größe axmod für die Ermittlung dieser Betriebszustände nicht verwendet werden kann, wird ein entsprechender Betriebszustand Ax4 ermittelt. Die Größe axmod kann dann nicht verwendet werden, wenn sie entweder fehlerhaft ist oder wie bereits schon erwähnt, lediglich teilweise beschrieben ist. Diese Fälle liegen vorwiegend dann vor, wenn beispielsweise der Sensor, mit dem die Motordrehzahl erfaßt wird, ausfällt oder fehlerhafte Signale liefert, oder wenn das Datenübertragungssystem, mit dem beispielsweise dem Block 205 für die Ermittlung der Größe axmod erforderliche Größen zugeführt werden, fehlerhaft arbeitet oder ausfällt. Ob die Größe axmod zur Ermittlung der Betriebszustände Ax1, Ax2 bzw. Ax3 verwendet werden kann, oder ob die Größe axmcd nicht verwendet werden kann, und somit die Betriebszustände Ax4 zu berücksichtigen sind, wird dem Block 203 durch ein in den Signalen Si enthaltenes Signal mitgeteilt.

In diesem Zusammenhang sei angemerkt, daß es für das erfindungsgemäße Verfahren bzw. für die erfindungsgemäße Vorrichtung keine Einschränkung darstellt, ob zur Ermittlung der Betriebszustände zuerst das erste Kriterium und anschließend das zweite Kriterium oder umgekehrt ausgeführt wird.

Ausgehend von Figur 4 sei bzgl. des Blockes 204 erwähnt, daß in den jeweiligen Betriebszuständen Axy durch bereits erwähnte Plausibilitätsabfragen ein Rad zur Ermittlung der Referenzgeschwindigkeit bzw. die beiden zur Bewertung der Geschwindigkeit des ausgewählten Rades erforderlichen Faktoren ermittelt werden.

Die Plausibilitätsabfragen sind für den "Antriebsfall" so ausgelegt, das für diesen Fall tendenziell solch ein Rad ausgewählt wird, dessen Geschwindigkeit kleiner als die Referenzgeschwindigkeit ist, wodurch ein Stützung der Referenzgeschwindigkeit nach "unten" erfolgt. Dagegen sind im "Bremsfall" die Plausibilitätsabfragen so ausgelegt, daß tendenziell solch ein Rad ausgewählt wird, dessen Geschwindigkeit größer als die Referenzgeschwindigkeit ist, wodurch eine Stützung der Referenzgeschwindigkeit nach "oben" erfolgt. Die beiden Faktoren werden dabei so ermittelt, daß ihre Werte um so größer sind, je eher das ausgewählte Rad für eine Stützung geeignet ist.

Bei Betriebszuständen, für die anhand der Plausibilitätsabfragen festgestellt wird, daß keines der Räder für die Ermittlung der Referenzgeschwindigkeit geeignet ist, werden die beiden Faktoren zu Null gewählt. Ausgehend von den Beziehungen (4) bzw. (5) erkennt man, daß in diesem Fall sowohl für die Größe axoff als auch für die Größe vref keine Stützung stattfindet, und sich für beide Größen der Wert für den nachfolgenden Zeitschritt aus dem Wert des vorhergehenden Zeitschrittes ergibt. Dies führt gemäß Beziehung (6) dazu, daß der Wert vref(n+1) der Referenzgeschwindigkeit zum einen über einen konstanten Anteil axoff(n-1) und einen variablen Anteil axmod(n) beeinflußt wird.

Liegt nun solch ein Betriebszustand vor, in dem sowohl die beiden Faktoren Null sind, als auch die Größe axmod nicht verwendet werden kann, so wird gemäß der Beziehung (6) der Wert vref(n+1) der Referenzgeschwindigkeit nur noch durch den konstanten Anteil axoff(n-1) beeinflußt und somit in Abhängigkeit dieses Wertes extrapoliert. Dies hat zur Folge, daß sich in einem solchen instabilen Betriebszustand die Steigung der Referenzgeschwindigkeit des Fahrzeuges immer in Abhängigkeit des Wertes axoff(n-1) des letzten stabilen Betriebszustandes ergibt. Folglich ergeben sich für die Referenzgeschwindigkeit vref des Fahrzeuges in Abhängigkeit des letzten stabilen Betriebszustandes unterschiedliche Steigungen.

**Patentansprüche**

1. Verfahren zur Ermittlung einer die Geschwindigkeit eines Fahrzeuges beschreibenden Größe (vref) ,

    bei dem für wenigstens zwei Räder die Geschwindigkeiten (vij) der Räder ermittelt werden,
    bei dem in Abhängigkeit wenigstens dieser Geschwindigkeiten (vij) eine erste Größe (axmod) ermittelt wird, die die Beschleunigung des Fahrzeuges beschreibt,
    bei dem wenigstens in Abhängigkeit der Geschwindigkeit (vaus) eines ausgewählten Rades die die Geschwindigkeit des Fahrzeuges beschreibende Größe (vref) ermittelt wird, wobei das hierfür benötigte Rad wenigstens in Abhängigkeit eines Betriebszustandes (Axy) des Fahrzeuges ermittelt wird,

    **dadurch gekennzeichnet**, daß

    der Betriebszustand (Axy) des Fahrzeuges wenigstens durch die Geschwindigkeiten (vij) von wenigstens zwei Rädern und
    die erste Größe (axmod), die die Beschleunigung des Fahrzeuges beschreibt, beschrieben wird.

2. Verfahren nach Anspruch 1, **dadurch gekennzeichnet**, daß die die Geschwindigkeit des Fahrzeuges beschreibende Große (vref) wenigstens aus einem eine Geschwindigkeit des Fahrzeuges beschreibenden Anteil (vvant (n+1)) und einem eine Beschleunigung des Fahrzeuges beschreibenden Anteil (vaant(n+1)) gebildet wird.

3. Verfähren nach Anspruch 2, **dadurch gekennzeichnet**, daß der Anteil (vvant(n+1)), der eine Geschwindigkeit des Fahrzeuges beschreibt, wenigstens in Abhängigkeit eines vorhergehenden Wertes (vref(n-1)) der die Geschwindigkeit des Fahrzeuges beschreibenden Größe und der mit einem ersten Faktor (kovx) bewerteten Geschwindigkeit (vaus(n)) des ausgewählten Rades ermittelt wird.

4. Verfahren nach Anspruch 2, **dadurch gekennzeichnet**, daß der Anteil (vaant(n+1)), der eine Beschleunigung des Fahrzeuges beschreibt, wenigstens in Abhängigkeit der die Beschleunigung des Fahrzeuges beschreibenden ersten Größe (axmod(n)) und der mit einem zweiten Faktor (koax) bewerteten Geschwindigkeit (vaus(n)) des ausgewählten Rades und einer die Beschleunigung des Fahrzeuges beschreibenden zweiten Größe (axoff(n-1)) ermittelt wird.

5. Verfahren nach Anspruch 1 oder 4, **dadurch gekennzeichnet**, daß zur Ermittlung der ersten, die Beschleunigung des Fahrzeuges beschreibenden Größe (axmod), als weitere Größen ferner wenigstens die an den einzelnen Rädern wirkenden Bremsdrücke (Pij) ermittelt werden und den Zustand des Motors kennzeichnende Größen (motzu) berücksichtigt werden.

6. Verfahren nach Anspruch 5, **dadurch gekennzeichnet**, daß als den Zustand des Motors kennzeichnende Größen (motzu) wenigstens die Motordrehzahl oder das vom Motor erzeugte Drehmoment ermittelt werden.

7. Verfahren nach Anspruch 3 oder 4, **dadurch gekennzeichnet**, daß der erste (kovx) bzw. der zweite (koax) Faktor

**EP 0 969 994 B1**

zur Bewertung der Geschwindigkeit (vaus) des ausgewählten Rades wenigstens in Abhängigkeit des Betriebszustandes (Axy) des Fahrzeuges ermittelt wird.

8. Verfahren nach Anspruch 7, **dadurch gekennzeichnet**, daß wenigstens für einen Teil der Betriebszustände (Axy) der erste (kovx) bzw. der zweite (koax) Faktor zur Bewertung der Geschwindigkeit (vaus) des ausgewählten Rades unter Verwendung von Plausibilitätsabfragen ermittelt wird.

9. Verfahren nach Anspruch 1, **dadurch gekennzeichnet**, daß in die Ermittlung des Betriebszustandes (Axy) des Fahrzeuges ferner eine zweite Größe (Si) eingeht, die wenigstens in Abhängigkeit von den Zustand des Motors kennzeichnenden Größen (motzu) ermittelt wird.

10. Verfahren nach Anspruch 1, **dadurch gekennzeichnet**, daß ausgehend von den Geschwindigkeiten (vij) der wenigstens zwei Räder zur Ermittlung des Betriebszustandes (Axy) des Fahrzeuges die Geschwindigkeiten dieser Räder nach ihrer Größe sortiert werden und die die Geschwindigkeit des Fahrzeuges beschreibende Größe (vref) mit den sortierten Geschwindigkeiten (vsi) verglichen wird.

11. Verfahren nach Anspruch 1, **dadurch gekennzeichnet**, daß wenigstens für einen Teil der Betriebszustände das ausgewählte Rad unter Verwendung von Plausibilitätsabfragen ermittelt wird.

12. Verfahren nach Anspruch 8 oder 11, **dadurch gekennzeichnet**,
daß bei der Durchführung der Plausibilitätsabfragen die Geschwindigkeiten der Räder (vij) und/oder die Schlupfwerte der einzelnen Räder beschreibende Größen (lambdaij) und/oder die die Beschleunigung des Fahrzeuges beschreibende erste Größe berücksichtigt werden.

13. Vorrichtung zur Ermittlung einer die Geschwindigkeit eines Fahrzeuges beschreibenden Größe (vref),

die erste Mittel (202) enthält, mit denen für wenigstens zwei Räder die Geschwindigkeiten (vij) der Räder ermittelt werden,
die zweite Mittel (205) enthält, mit denen in Abhängigkeit wenigstens dieser Geschwindigkeiten (vij) eine erste Größe (axmod) ermittelt wird, die die Beschleunigung des Fahrzeuges beschreibt, und mit denen wenigstens in Abhängigkeit der Geschwindigkeit (vaus) eines ausgewählten Rades die die Geschwindigkeit des Fahrzeuges beschreibende Größe (vref) ermittelt wird,
die dritte Mittel (204) enthält, mit denen das hierfür benötigte Rad wenigstens in Abhängigkeit eines Betriebszustandes (Axy) des Fahrzeuges ermittelt wird,

**dadurch gekennzeichnet**,
daß vierte Mittel (203) vorgesehen sind, mit denen der Betriebszustand (Axy) des Fahrzeuges ermittelt wird, wobei dieser wenigstens durch die Geschwindigkeiten (vij) von wenigstens zwei Rädern und die erste Größe (axmod), die die Beschleunigung des Fahrzeuges beschreibt, beschrieben wird.

**Claims**

1. Method for determining a variable (vref) describing the speed of a vehicle, in which for at least two wheels the speeds (vij) of the wheels are determined, in which, as a function of at least these speeds (vij), a first variable (axmod) is determined which describes the acceleration of the vehicle, in which, at least as a function of the speed (vaus) of a selected wheel, the variable (vref) describing the speed of the vehicle is determined, the wheel required for this purpose being determined at least as a function of an operating state (Axy) of the vehicle, **characterized in that** the operating state (Axy) of the vehicle is described at least by the speeds (vij) of at least two wheels, and by the first variable (axmod), which describes the acceleration of the vehicle.

2. Method according to Claim 1, **characterized in that** the variable (vref) describing the speed of the vehicle is formed at least from a component (vvant(n+1)) which describes a speed of the vehicle, and from a component (vaant(n+1)) which describes an acceleration of the vehicle.

3. Method according to Claim 2, **characterized in that** the component (vvant(n+1)) which describes a speed of the vehicle is determined at least as a function of a preceding value (vref(n-1)) of the variable describing the speed of the vehicle, and of the speed (vaus(n)), evaluated using a first factor (kovx), of the selected wheel.

**14**

4. Method according to Claim 2, **characterized in that** the component (vaant(n+1)) which describes an acceleration of the vehicle is determined at least as a function of the first variable (axmod(n)), which describes the acceleration of the vehicle, and of the speed (vaus(n)), evaluated using a second factor (koax), of the selected wheel, and of a second variable (axoff(n-1)), which describes the acceleration of the vehicle.

5. Method according to Claim 1 or 4, **characterized in that** for the purpose of determining the first variable (axmod), which describes the acceleration of the vehicle, at least the brake pressures (Pij) acting on the individual wheels are further determined as further variables, and variables (motzu) characterizing the state of the engine are taken into account.

6. Method according to Claim 5, **characterized in that** at least the engine speed or the torque produced by the engine are determined as variables (motzu) characterizing the state of the engine.

7. Method according to Claim 3 or 4, **characterized in that** the first (kovx) or the second (koax) factor is determined for evaluating the speed (vaus) of the selected wheel at least as a function of the operating state (Axy) of the vehicle.

8. Method according to Claim 7, **characterized in that** at least for a fraction of the operating states (Axy) the first (kovx) or the second (koax) factor for evaluating the speed (vaus) of the selected wheel is determined using plausibility interrogations.

9. Method according to Claim 1, **characterized in that** a second variable (Si), which is determined at least as a function of variables (motzu) characterizing the state of the engine, further features in the determination of the operating state (Axy) of the vehicle.

10. Method according to Claim 1, **characterized in that** starting from the speeds (vij) of the at least two wheels, in order to determine the operating state (Axy) of the vehicle the speeds of these wheels are sorted according to their magnitude, and the variable (vref) which describes the speed of the vehicle is compared with the sorted speeds (vsi).

11. Method according to Claim 1, **characterized in that** the selected wheel is determined by using plausibility interrogations, at least for a fraction of the operating states.

12. Method according to Claim 8 or 12, **characterized in that** when carrying out the plausibility interrogations account is taken of the speeds of the wheels (vij) and/or of the variables (lambdaij) which describe the slip values of the individual wheels and/or of the first variable, which describes the acceleration of the vehicle.

13. Device for determining a variable (vref) which describes the speed of a vehicle, which includes first means (202) with the aid of which the speeds (vij) of the wheels are determined for at least two wheels, which includes second means (205), with the aid of which a first variable (axmod) which describes the acceleration of the vehicle is determined as a function of at least these speeds (vij), and with the aid of which the variable (vref) which describes the speed of the vehicle is determined at least as a function of the speed (vaus) of a selected wheel, and which includes third means (204), with the aid of which the wheel required for this purpose is determined at least as a function of an operating state (Axy) of the vehicle, **characterized in that** fourth means (203) are provided, with the aid of which the operating state (Axy) of the vehicle is determined, this state being described at least by the speeds (vij) of at least two wheels, and by the first variable (axmod), which describes the acceleration of the vehicle.

**Revendications**

1. Procédé servant à déterminer une grandeur (vref) décrivant la vitesse d'un véhicule, dans lequel

   - pour au moins deux roues on détermine les vitesses (vij) des roues,
   - on détermine en fonction au moins de ces vitesses (vij) une première grandeur (axmod), qui décrit l'accélération du véhicule,
   - on détermine la grandeur (vref), qui décrit la vitesse du véhicule au moins en fonction de la vitesse (vaus) d'une roue sélectionnée, la roue nécessaire pour cela étant déterminée au moins en fonction d'un état de fonctionnement (Axy) du véhicule,

**caractérisé en ce que**
l'état de fonctionnement (Axy) du véhicule est décrit par les vitesses (vij) d'au moins deux roues et par la première grandeur (axmod), qui décrit l'accélération du véhicule.

**2.** Procédé selon la revendication 1,
**caractérisé en ce que**
la grandeur (vref) qui décrit la vitesse du véhicule est formée au moins à partir d'une partie (vvant(n+1)) décrivant une vitesse du véhicule et d'une partie (vaant(n+1)) décrivant une accélération du véhicule.

**3.** Procédé selon la revendication 2,
**caractérisé en ce que**
la partie (vvant(n+1)), qui décrit une vitesse du véhicule, est déterminée au moins en fonction d'une valeur précédente (vref(n-1)) de la grandeur qui décrit la vitesse du véhicule et de la vitesse (vaus(n)) de la roue sélectionnée, affectée d'un premier facteur (kovx).

**4.** Procédé selon la revendication 2,
**caractérisé en ce que**
la partie (vaant(n+1)), qui décrit une accélération du véhicule, est déterminée au moins en fonction de la première grandeur (axmod(n)), qui décrit l'accélération du véhicule, et de la vitesse (vaus(n)) de la roue sélectionnée affectée d'un deuxième facteur (koax) et d'une deuxième grandeur (axoff(n-1)), qui décrit l'accélération du véhicule.

**5.** Procédé selon la revendication 1 ou 4,
**caractérisé en ce que**
pour déterminer la première grandeur (axmod), qui décrit l'accélération du véhicule, on détermine en outre comme autres grandeurs au moins les pressions de freinage (Pij) qui s'exercent sur les différentes roues et on prend en considération des grandeurs (motzu), qui caractérisent l'état du moteur.

**6.** Procédé selon la revendication 5,
**caractérisé en ce que**
on détermine comme grandeurs (motzu), qui caractérisent l'état du moteur, au moins la vitesse de rotation du moteur ou le couple produit par le moteur.

**7.** Procédé selon la revendication 3 ou 4,
**caractérisé en ce que**
le premier facteur (kovx) ou le deuxième facteur (koax) servant à valoriser la vitesse (vaus) de la roue sélectionnée est déterminé au moins en fonction de l'état de fonctionnement (Axy) du véhicule.

**8.** Procédé selon la revendication 7,
**caractérisé en ce que**
le premier facteur (kovx) ou le deuxième facteur (koax) servant à valoriser la vitesse (vaus) de la roue sélectionnée est déterminé en utilisant des interrogations de vraisemblance au moins pour une partie des états de fonctionnement (Axy).

**9.** Procédé selon la revendication 1,
**caractérisé en ce que**
la détermination de l'état de fonctionnement (Axy) du véhicule intègre en outre une grandeur (Si) qui est déterminée au moins en fonction des grandeurs (motzu) qui caractérisent l'état du moteur.

**10.** Procédé selon la revendication 1,
**caractérisé en ce qu'**
en partant des vitesses (vij) d'au moins deux roues servant à déterminer l'état de fonctionnement (Axy) du véhicule, on classe les vitesses de ces roues selon leur grandeur et on compare la grandeur (vref), qui décrit la vitesse du véhicule aux vitesses (vsi) classées.

**11.** Procédé selon la revendication 1,
**caractérisé en ce que**
on détermine la roue sélectionnée en utilisant des interrogations de vraisemblance au moins pour une partie des états de fonctionnement.

12. Procédé selon la revendication 8 ou 11,
**caractérisé en ce que**
lors de la réalisation des interrogations de vraisemblance on prend en considération les vitesses des roues (vij) et/ou les grandeurs (lambdaij) qui décrivent les valeurs de glissement des différentes roues et/ou la première grandeur qui décrit l'accélération du véhicule.

13. Dispositif servant à déterminer une grandeur (vref) décrivant la vitesse d'un véhicule, qui contient :

- des premiers moyens (202) avec lesquels on détermine pour au moins deux roues les vitesses (vij) des roues,
- des seconds moyens (205) avec lesquels on détermine une première grandeur (axmod), qui décrit l'accélération du véhicule, en fonction au moins de ces vitesses (vij), et avec lesquels on détermine la grandeur (vref), qui décrit la vitesse du véhicule au moins en fonction de la vitesse (vaus) d'une roue sélectionnée,
- des troisièmes moyens (204), avec lesquels on détermine la roue nécessaire pour cela au moins en fonction d'un état de fonctionnement (Axy) du véhicule,

**caractérisé en ce que**
il est prévu des quatrièmes moyens (203) avec lesquels on détermine l'état de fonctionnement (Axy) du véhicule, celui-ci étant décrit au moins par les vitesses (vij) d'au moins deux roues et par la première grandeur (axmod), qui décrit l'accélération du véhicule.

FIG. 1

EP 0 969 994 B1

FIG. 2

103vr — nvr
103vl — nvl
103hr — nhr
103hl — nhl

108

Pvor

nij

201

202
vsi

203
Axy

204
lambdaij
dfij
Ki
vaus
vref
axmod

205
alva
Si

Mfz
vref motzu Pij

206

104

105vr — Avr
105vl — Avl
105hr — Ahr
105hl — Ahl

106
mot2
mot1

EP 0 969 994 B1

19

FIG. 3

EP 0 969 994 B1

| | Antriebsfall | Bremsfall | Sonstige Fälle |
|---|---|---|---|
| vs4, vs3, vs2, vs1, vref | A11 | A12 | A13, A14 |
| vs4, vs3, vs2, vref, vs1 | A21 | A22 | A23, A24 |
| vs4, vs3, vref, vs2, vs1 | A31 | A32 | A33, A34 |
| vs4, vref, vs3, vs2, vs1 | A41 | A42 | A43, A44 |
| vref, vs4, vs3, vs2, vs1 | A51 | A52 | A53, A54 |

FIG. 4

EP 0 969 994 B1